# EUROPÄISCHE PATENTSCHRIFT

(11) **EP 3 208 164 B1**
(45) Veröffentlichungstag und Bekanntmachung des Hinweises auf die Patenterteilung: **11.11.2020**
(21) Anmeldenummer: 16156135.2
(22) Anmeldetag: 17.02.2016
(51) Int. Cl.: B60T 13/74, F16D 55/226, F16D 65/18

(54) **KUGELGEWINDETRIEB**
BALL SCREW
VIS D'ENTRAINEMENT A BILLE

(43) Veröffentlichungstag der Anmeldung: 23.08.2017
(73) Patentinhaber: Robert Bosch GmbH, 70442 Stuttgart (DE)
(72) Erfinder: Kiforiuk, Alexander, 73061 Ebersbach a. d. Fils (DE); Hensel, Peter, 22147 Hamburg (DE); Weber, Jochen, 72800 Enningen unter Achalm (DE); Weh, Andreas, 87477 Sulzberg (DE); Mayr, Matthias, 87549 Rettenberg (DE); Oehler, Claus, 76227 Karlsruhe (DE); Boehm, Mark, 74251 Lehrsteinsfeld (DE)

(56) Entgegenhaltungen:
- DE-A1-102008 059 745
- DE-A1-102013 000 892
- US-A- 6 139 460

## Beschreibung

Die Erfindung betrifft einen Kugelgewindetrieb für ein elektromechanisches Bremssystem, das zur Bremskraftverstärkung einen elektrischen Aktuator, insbesondere einen Elektromotor umfasst. Zur Betätigung einer Bremse bzw. zur Durchführung eines Bremsvorgangs dreht der elektrische Aktuator in einer Bremsdrehrichtung und zur Entlastung der Bremse in einer, der Bremsdrehrichtung entgegengesetzten Entlastungsdrehrichtung. Die rotatorische Bewegung des elektrischen Aktuators ist mittels eines Untersetzungsgetriebes auf den Kugelgewindetrieb übertragbar und mittels des Kugelgewindetriebs in eine translatorische Bewegung umsetzbar. Zur Betätigung der Bremse erfolgt die translatorische Bewegung in einer Bremsrichtung und zur Entlastung der Bremse in einer, der Bremsrichtung entgegengesetzten Entlastungsrichtung. Insbesondere wird mittels der translatorischen Bewegung ein Bremskolben des Bremssystems entlang einer Kolbenlängsachse angetrieben. Der Kugelgewindetrieb weist zur rotatorisch-translatorischen Umsetzung eine Kugelmutter und eine Gewindespindel auf, die gemeinsam einen schraubenartig gewundenen Kugelkanal mit darin abwälzenden Kugeln bilden. Insbesondere kann der Kugelgewindetrieb mit einem oder mehreren Rückführungskanälen, bspw. nach DIN 69051 (2002-11) ausgebildet sein, sodass die Kugeln endlos innerhalb des Kugelkanals sowie des einen oder der mehreren Rückführungskanäle führbar sind.

Aus der DE 10 2013 216 327 A1 ist beispielsweise ein elektromechanisches Bremssystem mit einer hydraulisch betätigbaren Betriebsbremse bekannt. Das Bremssystem umfasst ferner einen elektromechanischen Aktuator, dessen Rotationsbewegung an die Gewindespindel eines Kugelgewindetriebs übertragen wird. Über Wälzkörper, die innerhalb eines schraubenförmigen Gewindegangs zwischen Gewindespindel und Gewindemutter des Kugelgewindetriebs angeordnet sind, wird die Rotationsbewegung der Gewindespindel in eine Translationsbewegung der Gewindemutter umgesetzt. Zur Durchführung eines Bremsvorgangs stützt sich die Gewindemutter an einem Bremskolben ab, wodurch dieser translatorisch bewegt wird und Bremsbeläge an einer Bremsscheibe zur Anlage bringt. Die Rotationsbewegung des elektromechanischen Aktuators wird unter Zwischenschaltung eines 2-stufigen Schneckengetriebes über einen Schaft auf die Gewindespindel untersetzt. Hierzu ist ein Schneckenrad des Schneckengetriebes mit dem Schaft bzw. der Gewindespindel verbunden.

Auch die WO 03/027528 A1 offenbart einen Kugelgewindetrieb als Rotations- /Translationsgetriebe für eine elektromechanische Scheibenbremse. Der Kugelgewindetrieb wird von einem Elektromotor umschlossen, der als Hohlwellenmotor ausgebildet und koaxial zu diesem angeordnet ist. Eine Hohlwelle des Elektromotors ist mit Kugellagern drehbar in einem Gehäuse gelagert und zur Übertragung einer Rotationsbewegung über ein Planetengetriebe mit einer weiteren Hohlwelle verbunden. Die Hohlwelle ist drehfest in eine zylindrische Gewindespindel des Kugelgewindetriebs eingepresst und durch einen Bördel gesichert. Durch rotierenden Antrieb der Gewindespindel wird die Kugelmutter axial verschoben um einen Reibbremsbelag an eine Bremsscheibe des elektromechanischen Bremssystems zu drücken.

Die Umsetzung einer rotatorischen Bewegung eines elektrischen Aktuators in eine translatorische Bewegung über einen Kugelgewindetrieb ist aus der DE 10 2008 059 745 A1 für eine elektromechanische Servolenkung bekannt. Auch in der Ausführung eines Lenkgetriebes wird die Rotationsbewegung des Elektromotors über ein Planetengetriebe als Untersetzungsgetriebe auf den Kugelgewindetrieb übertragen. Anders sind jedoch die Planetenräder hierzu auf Bolzen, die mit der Kugelmutter einstückig ausgeführt sind, gelagert. Eine Drehbewegung eines Hohlwellenmotors wird zunächst auf die Planetenräder und über die Bolzen auf die Kugelmutter übertragen. Je nach Drehrichtung der Kugelmutter führt die Gewindespindel eine translatorische Bewegung nach rechts oder links aus, woraus eine translatorische Bewegung einer Spurstange zur Durchführung von Lenkvorgängen folgt.

Nachteilig an den, aus dem Stand der Technik bekannten Ausführungen ist oftmals die Ausbildung einer drehfesten Verbindung zwischen einem Untersetzungsgetriebe und dem drehbeweglich gelagerten Teil des Kugelgewindetriebs. So führt die Ausbildung von einstückig mit einer Kugelmutter ausgeführten Bolzen aufgrund eines aufwändigen Fräsverfahrens beispielsweise zu erhöhten Herstellungskosten. Auch weisen die beschriebenen Kugelgewindetriebe kaum Flexibilität bezüglich ihrer Verwendungsmöglichkeiten auf.

Es ist daher Aufgabe der vorliegenden Erfindung, einen verbesserten Kugelgewindetrieb, der insbesondere in der Herstellung und im Einbau kostengünstiger ist, für ein elektromechanisches Bremssystem anzugeben bzw. eine alternative Verwendung eines solchen Kugelgewindetriebs anzugeben.

Die Erfindungsaufgabe wird durch einen Kugelgewindetrieb für ein elektromechanisches Bremssystem gemäß Anspruch 1 und durch eine Verwendung eines Kugelgewindetriebs gemäß Anspruch 14 gelöst.

Ein erfindungsgemäßer Kugelgewindetrieb für ein elektromechanisches Bremssystem der eingangs beschriebenen Art kennzeichnet sich dadurch, dass die Kugelmutter zur Aufnahme von zwei oder mehr Passstiften ausgebildet ist, wobei die rotatorische Bewegung des elektrischen Aktuators über ein Untersetzungsgetriebe mittels der Passstifte auf die Kugelmutter übertragbar ist. Mittels der Kugeln ist die Drehbewegung der Kugelmutter in eine translatorische Bewegung der Gewindespindel umsetzbar. Je nach Drehrichtung des elektrischen Aktuators erfährt die Gewindespindel eine translatorische Bewegung in einer Bremsrichtung zur Durchführung eines Bremsvorgangs bzw. in einer Entlastungsrichtung zur Entlastung der Bremse, insbesondere eines Bremskolbens. Zur Aufnahme der Passstifte kann die Kugelmutter bspw. mit Bohrungen oder ähnlichen Ausnehmungen versehen sein. Die Passstifte werden z. B. mittels einer Press- oder Übergangspassung innerhalb der Bohrungen angeordnet.

Gemäß einer vorteilhaften Ausgestaltung für ein Planetengetriebe als Untersetzungsgetriebe entspricht die Anzahl der Passstifte, die von der Kugelmutter des Kugelgewindetriebs aufnehmbar sind, einer Anzahl von Planetenrädern des Planetengetriebes. Vorzugsweise ist die Kugelmutter mit drei Bohrungen zur Aufnahme von drei Passstiften, die jeweils mittels einer Spielpassung drehbeweglich in einem der Planetenräder gelagert sind, versehen. Die Planetenräder umlaufen ein Sonnenrad, wodurch die Kugelmutter über die Passstifte in Rotation versetzt wird. Die Übertragung bzw. Untersetzung der rotatorischen Bewegung des elektrischen Aktuators über das Planetengetriebe erfolgt in an sich bekannter Weise.

Nach einer vorteilhaften Variante der Erfindung ist die Gewindespindel des Kugelgewindetriebs mittels eines kaltumformenden Herstellungsverfahrens mit einer erhöhten Werkstofffestigkeit ausgebildet. Beispielsweise wird das Gewinde durch ein spanloses Gewindewalzen bzw. Gewinderollen auf die Kugelspindel aufgebracht. Vorteilhaft gegenüber dem spanenden Gewindeschneiden ist hierbei, dass die Werkstofffaser lediglich umgeformt und nicht unterbrochen wird, wodurch eine höhere Oberflächenfestigkeit des Materials, eine erhöhte Verschleißfestigkeit und eine reduzierte Kerbempfindlichkeit erlangt wird. Ebenso ist der Materialbedarf geringer, da bei der Umformung kein "Verschnitt" in Form von Spänen auftritt. Sowohl die Gewindespindel als auch die Kugelmutter sind vorzugsweise aus Stahl gefertigt.

Gemäß einer ebenfalls vorteilhaften Erfindungsvariante, ist ein radialer Kernbereich der Gewindespindel mit einer Höhlung ausgebildet. Insbesondere weist die Gewindespindel die Form einer Hohlwelle auf, wobei eine rotationssymmetrische Höhlung im Innern der Gewindespindel entlang deren Längsachse angeordnet ist. Vorzugsweise orientiert sich die Dimensionierung des Durchmessers der Höhlung anhand des Härtungsgrades des Spindelwerkstoffs, insbesondere des Spindelstahls, um eine ausreichende Festigkeit der Gewindespindel zur Aufnahme radialer Kräfte zu gewährleisten. Bspw. kann die Höhlung durch Umformen eines Rohrrohlings zu einer Gewindespindel oder mittels einer nachträglichen Bohrung ausgebildet sein. Durch die Höhlung lässt sich eine Gewichtsersparnis in Höhe von etwa 10 bis 15 % des Gesamtgewichts des Kugelgewindetriebs realisieren, was wiederum zu einer Kosten- und Energiereduzierung führt.

Erfindungsgemäß ist der Kugelgewindetrieb mit einem radialen Endanschlag zur Begrenzung der translatorischen Bewegung der Gewindespindel ausgestattet. Erfindungsgemäß weist die Kugelgewindemutter hierzu einen radial nach innen gerichteten Anschlag auf und die Gewindespindel einen radial nach außen gerichteten Gegenanschlag. Der Anschlag und der Gegenanschlag sind hierbei zum gegenseitigen, formschlüssigen Eingriff ausgebildet. Der radiale Endanschlag dient insbesondere zur Begrenzung der Relativbewegung zwischen Kugelmutter und Gewindespindel und verhindert so ein Verklemmen und/oder Verkanten des Kugelgewindetriebs. Insbesondere ist der Anschlag der Kugelmutter einstückig mit dieser ausgeführt und wird beispielsweise bereits bei der Kugelmutterherstellung mittels eines Umformverfahrens ausgebildet. Der Gegenanschlag der Gewindespindel ist vorzugsweise auf eines oder auf beide axialen Spindelenden aufgesetzt bzw. aufgesteckt. Die Gewindespindel kann hierzu an ihrem jeweiligen Spindelende eine Rändelung zum formschlüssigen Eingriff mit dem jeweiligen Gegenanschlag aufweisen.

Anders als bei den aus dem Stand der Technik bekannten elektromechanischen Bremssystemen erfordert eine Übertragung der Rotationsbewegung des elektrischen Aktuators auf die Kugelmutter, dass diese drehbeweglich innerhalb eines Gehäuses des elektromechanischen Bremssystems und/oder eines Hohlwellenmotors lagerbar ist. Die Kugelmutter ist hierzu vorzugsweise mit einem Axiallager ausgebildet bzw. innerhalb eines Axiallagers angeordnet. Das Axiallager dient der Aufnahme von Axiallasten, die aus der translatorischen Bewegung der Gewindespindel resultieren und weist hierzu ein möglichst geringes Lagerspiel in axialer Richtung auf. Nach einer besonders vorteilhaften Ausführung der Erfindung ist ein Innenring des Axiallagers einstückig mit der Kugelmutter ausgeführt und wird bereits bei deren Herstellung beispielsweise mittels eines Umformverfahrens ausgebildet. Auf diese Weise lässt sich eine erhöhte Präzision zwischen Kugelmutter und Axiallager aber auch eine vereinfachte Montage erlangen.

Das Axiallager kann bspw. als Schrägkugellager ausgebildet sein. Zur Durchführung eines Bremsvorgangs bewegt sich die Gewindespindel in einer axialen Bremsrichtung und die Kugelmutter bzw. das Schrägkugellager in einer rotatorischen Bremsdrehrichtung. Zur Entlastung der Bremse erfolgen eine axiale Bewegung der Gewindespindel und eine rotatorische Bewegung der Kugelmutter mitsamt Schrägkugellager in einer Entlastungsrichtung bzw. einer Entlastungsdrehrichtung jeweils entgegengesetzt. Das Schrägkugellager kann derart unsymmetrisch ausgebildet sein, dass die Kugeln bei einer Drehung in Bremsdrehrichtung einen ersten Anschlag mit einer ersten Schulter zur Einstellung eines ersten Druckwinkels bilden und bei einer Drehung in Entlastungsdrehrichtung einen zweiten Anschlag mit einer zweiten Schulter zur Einstellung eines zweiten Druckwinkels. Die Druckwinkeldifferenz beträgt vorzugsweise mindestens 5°.

Die auf das Schrägkugellager einwirkenden Axiallasten sind während der Bewegung der Gewindespindel in Bremsrichtung, d. h. zur Durchführung eines Bremsvorgangs, wesentlich höher als in Entlastungsrichtung. Es ist daher vorteilhaft, den ersten Druckwinkel in entsprechender Bremsdrehrichtung größer einzustellen als den zweiten Druckwinkel in entsprechender Entlastungsdrehrichtung. Folglich kann die zweite Schulter kleiner als die erste Schulter ausgeführt sein, was wiederum zu einer Material- und Kosteneinsparung führt.

In einer alternativen Ausführung der Erfindung ist das Axiallager als Vierpunktlager ausgebildet und analog obiger Schrägkugellagerausführung mit einem ersten Druckwinkel in Bremsdrehrichtung und einem zweiten Druckwinkel in Entlastungsdrehrichtung ausgebildet, wobei der erste Druckwinkel vorzugsweise größer ist als der zweite Druckwinkel. Die Druckwinkel im Vierpunktlager können bspw. mittels eines sogenannten gotischen Bogens der Kugellaufbahnen sowohl eines Außenrings als auch des Innenrings des Vierpunktlagers, vorzugsweise mit einer asymmetrischen Geometrie, eingestellt sein.

Alternativ oder zusätzlich können die Kugeln, die innerhalb des schraubenartig gewundenen Kugelkanals zwischen der Kugelmutter und der Gewindespindel abwälzen einen ersten Kontaktwinkel in einer Bremsrichtung und einen zweiten Kontaktwinkel in einer Entlastungsrichtung mit dem Kugelkanal aufweisen. Anders als im Axiallager ist es vorteilhaft, den ersten Kontaktwinkel kleiner einzustellen, als den zweiten Kontaktwinkel um eine axiale Bewegung der Gewindespindel in Bremsrichtung zu begünstigen bzw. um den Anlaufwiderstands des Kugelgewindetriebs in Bremsrichtung zu reduzieren. Die Kontaktwinkel können bspw. mittels eines gotischen Bogens sowohl in einem Innengewinde der Kugelmutter als auch einem Außengewinde der Gewindespindel, vorzugsweise mit asymmetrischer Geometrie eingestellt sein.

Eine erfindungsgemäße Verwendung sieht vor, den Kugelgewindetrieb zur rotatorisch-translatorischen Bewegungsumsetzung in einem elektromechanischen Lenksystem einzusetzen. Zur Durchführung von Lenkvorgängen ist die Rotationsbewegung eines elektrischen Aktuators, in analoger Weise zur Verwendung mit einer elektromechanischen Feststellbremse über ein Untersetzungsgetriebe, insbesondere ein Planetengetriebe, auf die Kugelmutter übertragbar. Die Kugelmutter ist hierzu zur Aufnahme von zwei oder mehr Passstiften ausgebildet, insbesondere mit Bohrungen versehen, wobei eine rotatorische Bewegung über die Passstifte von dem Untersetzungsgetriebe auf die Kugelmutter übertragbar ist. Mittels der Kugeln, die innerhalb des schraubenartig gewundenen Kugelkanals abwälzen ist die Drehbewegung der Kugelmutter in eine translatorische bzw. axiale Bewegung der Gewindespindel umsetzbar. Zur Durchführung von Lenkvorgängen ist zwischen der Gewindespindel und einer Spurstange des elektromechanischen Lenksystems eine Wirkverbindung ausbildbar, sodass die translatorische bzw. axiale Bewegung auf die Spurstange übertragbar ist. Im elektromechanischen Lenksystem entspricht die Bremsrichtung der Gewindespindel, die beim elektromechanischen Bremssystem zur Durchführung von Bremsvorgängen vorgesehen ist, einer ersten Einschlagsrichtung des Lenksystems bzw. die Entlastungsrichtung einer zweiten Einschlagsrichtung des Lenksystems. Entsprechend dreht der elektrische Aktuator des elektromechanischen Lenksystems in einer ersten bzw. einer zweiten Drehrichtung.

Weitere Einzelheiten, Merkmale, Merkmals(unter)Kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in:
Figur 1 einen Längsschnitt einer beispielhaften Ausführung eines erfindungsgemäßen Kugelgewindetriebs,
Figur 2 eine schematische, beispielhafte Darstellung eines Schrägkugellagers des erfindungsgemäßen Kugelgewindetriebs aus Figur 1,
Figur 3 einen Längsschnitt des erfindungsgemäßen Kugelgewindetriebs aus Figur 1 mit einer beispielhaften Ausführung eines Vierpunktlagers,
Figur 4 eine schematische, beispielhafte Darstellung eines Vierpunktkugellagers des erfindungsgemäßen Kugelgewindetriebs aus Figur 3,
Figur 5 eine schematische, beispielhafte Darstellung eines schraubenartig gewundenen Kugelkanals des erfindungsgemäßen Kugelgewindetriebs aus Figur 1 oder 3,
Figur 6 eine beispielhafte Ausführung einer Gewindespindel mit einem radialen Endanschlag für einen erfindungsgemäßen Kugelgewindetrieb in einer perspektivischen Darstellung,
Figur 7 eine beispielhafte Ausführung einer Gewindespindel und einer Kugelmutter mit einem radialen Endanschlag für einen erfindungsgemäßen Kugelgewindetrieb in einer perspektivischen Darstellung,
Figur 8 einen Längsschnitt einer beispielhaften Ausführung eines erfindungsgemäßen Kugelgewindetriebs mit einer als Hohlwelle ausgebildeten Gewindespindel,
Figur 9 ein schematisches Profil eines Außengewinnes einer beispielhaften Gewindespindel für einen erfindungsgemäßen Kugelgewindetrieb.

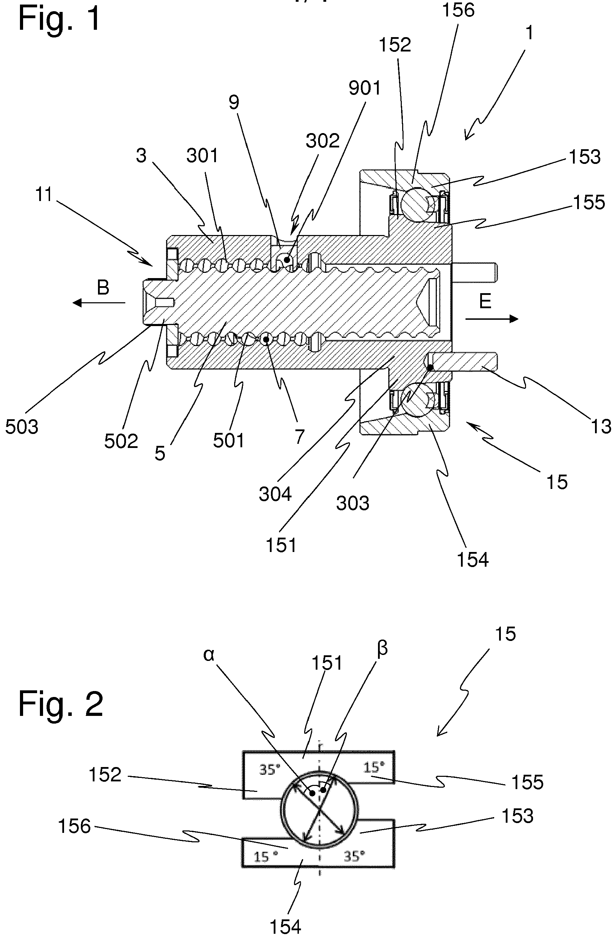

Figur 1 zeigt einen Schnitt entlang einer Längsachse einer beispielhaften Ausführung eines erfindungsgemäßen Kugelgewindetriebs 1. Der Kugelgewindetrieb 1 umfasst eine Kugelmutter 3, die eine Gewindespindel 5 koaxial umgibt. Ein Innengewinde 301 der Kugelmutter 3 und ein Außengewinde 501 der Gewindespindel 5 bilden gemeinsam einen schraubenartig gewundenen Kugelkanal 7 zur Aufnahme von Kugeln. Innerhalb einer Ausnehmung 302 der Kugelmutter 3 ist ein Rückführungselement 9 angeordnet, das einen Windungsanfang mit einem Windungsende des Kugelkanals 7 verbindet und so einen Rückführungskanal 901 ausbildet, der ein endloses Umlaufen der Kugeln ermöglicht. Ein erstes axiales Ende 502 der Gewindespindel 5 weist eine Rändelung 503 entlang einer radialen Außenfläche auf, die zur Ausbildung eines radialen Endanschlags 11 verwendbar ist, der in einem späteren Absatz näher erläutert wird.

Die Kugelmutter 3 umfasst drei axial Bohrungen 303, die entlang eines Umfangs eines zweiten axialen Endes 304 der Kugelmutter 3 angeordnet sind und jeweils zur form- und/oder kraftschlüssigen Aufnahme eines Passstifts 13 ausgebildet sind (eine dritte Bohrung 303 sowie ein dritter Passstift 13 sind aufgrund der Schnittdarstellung nicht sichtbar). Insbesondere sind die Passstifte 13 mittels einer Press- oder einer Übergangspassung innerhalb der jeweiligen Bohrung 303 fixiert. Die Passstifte 13 sind zum Eingriff mit einem Planetengetriebe ausgebildet und können drehbeweglich, z. B. mittels einer Spielpassung, jeweils innerhalb eines Planetenrads gelagert werden. Der Winkelabstand zwischen den Passstiften 13 bzw. den axialen Bohrungen 303 beträgt jeweils 120° entsprechend einer Anordnung der Planetenräder des Planetengetriebes.

Zur Durchführung eines Bremsvorgangs bzw. zur Betätigung der Bremse dreht ein elektrischer Aktuator (nicht dargestellt) in einer Bremsdrehrichtung. Die Drehbewegung wird über ein Planetengetriebe mit drei Planetenrädern, die ein Sonnenrad umlaufen (nicht dargestellt) in an sich bekannter Weise untersetzt und die Umlaufbewegung der Planetenräder mittels der Passstifte13, die jeweils drehbeweglich innerhalb eines der Planetenräder gelagert sind, auf die Kugelmutter 3 übertragen. Die Kugelmutter 3 ist innerhalb eines Gehäuses des elektromechanischen Bremssystems und/oder eines Hohlwellenmotors (nicht dargestellt) in axialer sowie radialer Richtung fixiert bzw. abgestützt. Die innerhalb des schraubenartig gewundenen Kugelkanals 7 abwälzenden Kugeln setzen die rotatorische Bewegung der Kugelmutter 3 in eine translatorische Bewegung der Gewindespindel 5 in einer Bremsrichtung B um. Die translatorische Bewegung der Gewindespindel 5 wird insbesondere auf einen Bremszylinder (nicht dargestellt) zur Betätigung der Bremse übertragen. Zur Entlastung der Bremse dreht der elektrische Aktuator in einer Entlastungsdrehrichtung, die entsprechend in einer translatorischen Bewegung der Gewindespindel 5 in einer Entlastungsrichtung E resultiert.

Das zweite axiale Ende 304 der Kugelmutter 3 ist einstückig mit einem Innenring 151 eines Axiallagers, hier als Schrägkugellager 15 ausgeführt, ausgebildet. Der Innenring 151 weist eine erste Schulter 152 auf, die mit einer komplementären ersten Schulter 153 eines Außenrings 154 des Schrägkugellagers 15 eine Kugelführung zur Einstellung eines ersten Druckwinkels α in Bremsdrehrichtung bildet. Eine zweite Schulter 155 des Innenrings 151 bildet mit einer komplementären zweiten Schulter 156 des Außenrings 154 eine weitere Kugelführung zur Einstellung eines zweiten Druckwinkels β in Entlastungsdrehrichtung. Anhand der schematischen Darstellung in Figur 2 ist die Ausbildung der ersten 152, 153 und zweiten Schultern 155, 156 zur Einstellung der unterschiedlichen Druckwinkel α, β veranschaulicht. Unter einem Druckwinkel versteht man die Schrägstellung zur Radialebene des Lagers, entlang welcher die, das Schräglager 15 belastenden Kräfte vom Innenring 151 auf den Außenring 154 übertragen werden. Zur Durchführung eines Bremsvorgangs wälzen die Kugeln in einer Bremsdrehrichtung vorzugsweise mit einem Druckwinkel α = 35° zur Aufnahme der Axiallasten ab. Zur Entlastung der Bremse wälzen die Kugeln in einer Entlastungsdrehrichtung vorzugsweise mit einem Druckwinkel β = 15° zur Verringerung der Lagerreibung ab. Die ersten Schultern 152, 153 sind hierzu jeweils größer ausgebildet als die zweiten Schultern 155, 156.

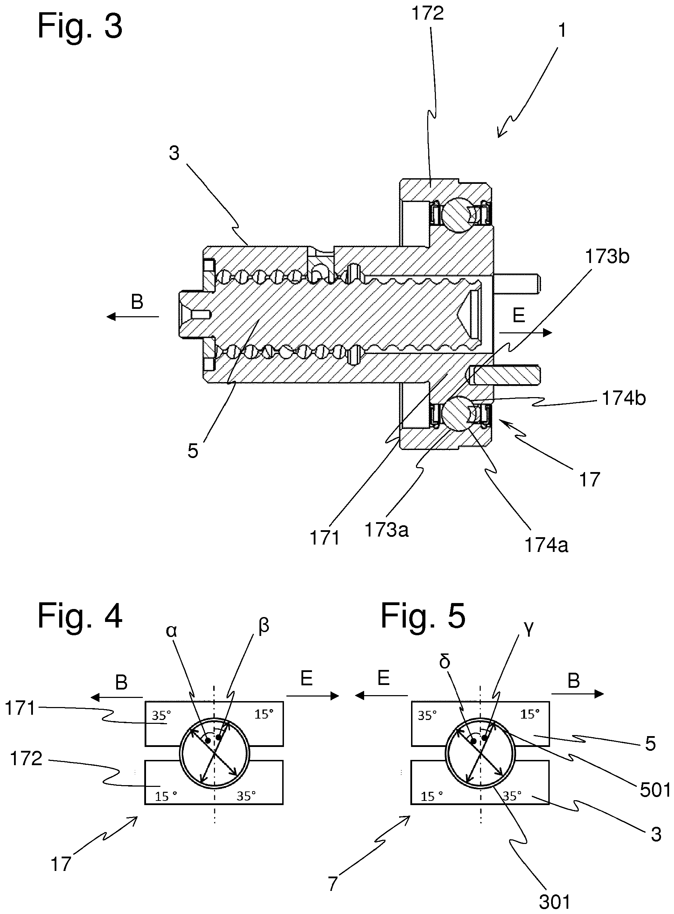

Figur 3 zeigt einen Schnitt entlang der Längsachse des Kugelgewindetriebs 1 aus Figur 1, jedoch in einer alternativen, beispielhaften Ausführung mit einem Vierpunktlager 17 als Axiallager. Die Kugelmutter 3 ist einstückig mit einem Innenring 171 des Vierpunktlagers 17 ausgeführt. Sowohl der Innenring 171 als auch ein Außenring 172 können beispielsweise mit je zwei kreisbogenförmigen Laufbahnen 173a, 173b, 174a, 174b ausgebildet sein, deren Krümmungsmittelpunkte so gegeneinander versetzt sind, dass die Kugeln die Laufbahnen 173a, 173b, 174a, 174b in vier Punkten berühren (gotischer Bogen, hier nicht dargestellt). Gemäß der schematischen Darstellung in Figur 4 sind die jeweiligen Krümmungsradien so ausgebildet, dass sich vorzugsweise ein Druckwinkel α = 35° in der Bremsdrehrichtung bzw. ein Druckwinkel β = 15° (jeweils bezüglich der Radialebene) in der Entlastungsdrehrichtung einstellt.

Ein besonderer Vorteil ergibt sich aus der Kombination eines mit der Kugelmutter 3 einstückig ausgeführten Innenrings 151, 171 eines Axiallagers 15, 17 und den axialen Bohrungen 303 zur Aufnahme der Passstifte 13. Aufgrund des Innenrings 151, 171 weist die Kugelmutter 3 einen vergrößerten Außendurchmesser an ihrem zweiten axialen Ende 304 auf, woraus sich eine vergrößerte axiale Endfläche der Kugelmutter 3 zur erleichterten Ausbildung der Bohrungen 303 ergibt.

In Figur 5 ist der Kugelkanal 7, der schraubenartig zwischen der Kugelmutter 3 und der Gewindespindel 5 verläuft, schematisch dargestellt. Ähnlich wie beim zuvor beschriebenen Vierpunktlager 17 sind in einer beispielhaften Ausführung der Erfindung das Innengewinde 301 der Kugelmutter 3 sowie das Außengewinde 501 der Gewindespindel 5 jeweils mit zwei kreisbogenförmigen Laufbahnen, deren Krümmungsmittelpunkte gegeneinander versetzt sind, ausgebildet. Auf diese Weise ergibt sich, je nach Bewegungsrichtung der Gewindespindel 5 ein erster Kontaktwinkel γ = 15° bzw. ein zweiter Kontaktwinkel δ = 35°. Anders als beim Vierpunktlager 17 ist der erste Kontaktwinkel γ in Bremsrichtung B kleiner als der zweite Kontaktwinkel δ in Entlastungsrichtung E, um eine axiale Bewegung der Gewindespindel 5 in Bremsrichtung B zu begünstigen bzw. um den Anlaufwiderstand des Kugelgewindetriebs 1 in Bremsrichtung B zu reduzieren. Insbesondere lässt sich hierdurch ein "Stottern" der Kugeln innerhalb des Kugelkanals 7, das zu erhöhtem Verschleiß und einer Verminderung des Wirkungsgrades führt, vermeiden.

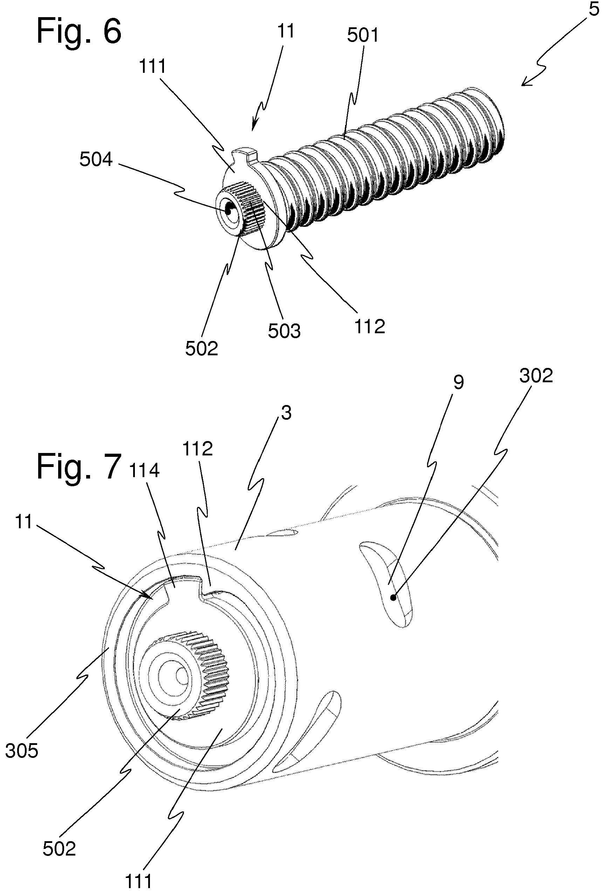

Figur 6 zeigt eine beispielhafte Ausführung einer Gewindespindel 5 für einen erfindungsgemäßen Kugelgewindetrieb 1 in einer perspektivischen Darstellung. Das Außengewinde 501 ist an einem ersten axialen Ende 502 der Gewindespindel 5 mit einer Rändelung 503 versehen. Die Rändelung 503 ist entlang einer radialen Außenfläche des ersten axialen Endes 502 ausgebildet und weist einen geringeren Durchmesser auf als das Außengewinde 501. Innerhalb der Rändelung 503 ist eine koaxiale Ausnehmung, insbesondere eine koaxiale Bohrung 504 ausgebildet. Ein Gegenanschlag 111 ist als Teil eines radialen Endanschlags 11 formschlüssig auf die Rändelung 503 aufgesteckt. Der Gegenanschlag 111 weist hierzu eine komplementäre Gegenrändelung 112 entlang eines inneren Durchmessers auf.

In Figur 7 ist eine perspektivische Ansicht des ersten axialen Endes 502 der Gewindespindel 5 sowie eines ersten axialen Endes 305 der Kugelmutter 3 dargestellt. Die Kugelmutter 3 ist mit einem radial nach innen weisenden Anschlag 113 einstückig ausgebildet, der formschlüssig mit dem Gegenanschlag 111 den radialen Endanschlag 11 bildet. Der Anschlag 113 ist als Sporn, in der Form einer schräg gestellten Welle ausgebildet, sodass ein schwalbenschwanzförmiger Abschnitt 114 untergreifbar ist. Mittels einer Relativdrehung zwischen der Kugelmutter 3 und der Gewindespindel 5 wird der Formschluss des radialen Endanschlags 11 geschlossen bzw. gelöst.

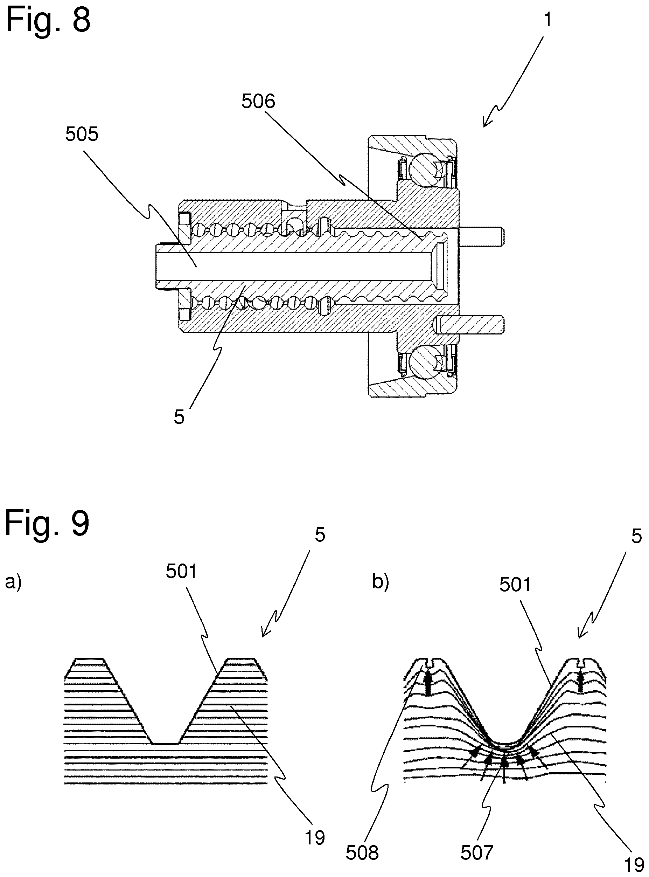

Die Ausbildung der Gewindespindel 5 als Hohlwelle ist in einer Schnittdarstellung des Kugelgewindetriebs 1 gemäß Figur 8 gezeigt. Die Gewindespindel 5 weist entlang ihrer Rotationsachse eine rotationssymmetrische bzw. zylindrische Höhlung 505 auf. Die Höhlung 505 erstreckt sich entlang der vollständigen axialen Länge der Gewindespindel 5 und ist an einem zweiten axialen Ende 506 mit einer Senklochbohrung versehen.

Figur 9 zeigt ein schematisches Profil eines Außengewindes 501 einer Gewindespindel 5, welches mittels spanabhebender Bearbeitung, insbesondere Gewindeschneiden (Figur 9a) bzw. mittels nicht spanender Bearbeitung, insbesondere Gewinderollen bzw. Gewindewalzen (Figur 9b) ausgebildet wurde. Gemäß Figur 9a führt das spanende Gewindeschneiden zu einer Unterbrechung bzw. einem Abriss der Werkstofffasern 19 im Bereich der des Außengewindes 501. Anders verlaufen die Werkstofffasern 19 bei einem rollierten, umgeformten Außengewinde 501, gemäß Figur 9b ununterbrochen und entsprechend der Form des Außengewindes 501. Besondere Merkmale einer gewalzten bzw. rollierten Gewindespindel 5 sind die Ausbildung eines Rundungsradius am Gewindegrund 507 sowie die Ausbildung eines herzförmigen Aufwurfs der Gewindeoberkante 508.
- 1: Kugelgewindetrieb
- 3: Kugelmutter
- 301: Innengewinde
- 302: Ausnehmung
- 303: axiale Bohrung
- 304: zweites axiales Ende der Kugelmutter
- 305: erstes axiales Ende der Kugelmutter
- 5: Gewindespindel
- 501: Außengewinde
- 502: erstes axiales Ende der Gewindespindel
- 503: Rändelung
- 504: koaxiale Bohrung
- 505: Höhlung
- 506: zweites axiales Ende der Gewindespindel
- 507: Gewindegrund
- 508: Gewindeoberkante
- 7: Kugelkanal
- 9: Rückführungselement
- 901: Rückführungskanal
- 11: radialer Endanschlag
- 111: Gegenanschlag
- 112: komplementäre Gegenrändelung
- 113: Anschlag
- 114: schwalbenschwanzförmiger Abschnitt
- 13: Passstift
- 15: Schrägkugellager
- 151: Innenring
- 152: erste Schulter
- 153: komplementäre erste Schulter
- 154: Außenring
- 155: zweite Schulter
- 156: komplementäre zweite Schulter
- 17: Vierpunktlager
- 171: Innenring
- 172: Außenring
- 173a, 173b, 174a, 174b: kreisbogenförmige Laufbahn
- 19: Werkstofffaser
- B: Bremsrichtung
- E: Entlastungsrichtung
- α: erster Druckwinkel
- β: zweiter Druckwinkel
- γ: erster Kontaktwinkel
- δ: zweiter Kontaktwinkel

## Patentansprüche

1. Kugelgewindetrieb (1) für ein elektromechanisches Bremssystem, wobei eine rotatorische Bewegung eines elektrischen Aktuators, der zur Betätigung einer Bremse des elektromechanischen Bremssystems in einer Bremsdrehrichtung dreht und zur Entlastung der Bremse in einer Entlastungdrehrichtung dreht, mittels eines Untersetzungsgetriebes auf den Kugelgewindetrieb (1) übertragbar ist und mittels des Kugelgewindetriebs (1) in eine translatorische Bewegung, zur Betätigung der Bremse in einer Bremsrichtung (B) und zur Entlastung der Bremse in einer Entlastungsrichtung (E) umsetzbar ist, welcher Kugelgewindetrieb (1) eine Kugelmutter (3) und eine Gewindespindel (5) umfasst, die gemeinsam einen schraubenartig gewundenen Kugelkanal (7) mit darin abwälzenden Kugeln ausbilden und wobei die Gewindespindel (5) mit einem radial nach außen weisenden Gegenanschlag (111,114) ausgebildet ist, **dadurch gekennzeichnet, dass** die Kugelmutter (3) zur Aufnahme von zwei oder mehr Passstiften (13) ausgebildet ist, wobei die rotatorische Bewegung mittels der Passstifte (13) von dem Untersetzungsgetriebe auf die Kugelmutter (3) übertragbar ist und mittels der Kugeln in eine translatorische Bewegung der Gewindespindel (5) umsetzbar ist und dass ein radialer Endanschlag (11) zur Begrenzung einer translatorischen Bewegung der Gewindespindel (5) vorgesehen ist, wobei die Kugelmutter (3) einen radial nach innen weisenden Anschlag (113) zum gegenseitigen, formschlüssigen Eingriff mit dem Gegenanschlag (111, 114) aufweist.

2. Kugelgewindetrieb (1) nach Anspruch 1, **dadurch gekennzeichnet, dass** die Anzahl der Passstifte (13), die von der Kugelmutter (3) aufnehmbar sind einer Anzahl von Planetenrädern eines Planetengetriebes entspricht, wobei das Untersetzungsgetriebe als Planetengetriebe ausgebildet ist.

3. Kugelgewindetrieb (1) nach einem der vorhergehenden Ansprüche, **dadurch gekennzeichnet, dass** die Gewindespindel (5) mittels eines umformenden Herstellungsverfahrens mit einer erhöhten Werkstofffestigkeit ausgebildet ist.

4. Kugelgewindetrieb (1) nach einem der vorhergehenden Ansprüche, **dadurch gekennzeichnet, dass** ein radialer Kernbereich der Gewindespindel (5) mit einer Höhlung (505) ausgebildet ist.

5. Kugelgewindetrieb (1) nach einem der Ansprüche 1 bis 4,
**dadurch gekennzeichnet,**
**dass** der Anschlag (113) einstückig mit der Kugelmutter (3) ausgebildet ist und/oder der Gegenanschlag (111) auf eines oder beide axialen Enden (502) der Gewindespindel (5) aufsetzbar ist.

6. Kugelgewindetrieb (1) nach einem der vorhergehenden Ansprüche, **dadurch gekennzeichnet, dass** die Kugelmutter (3) über ein Axiallager (15, 17) in einem Gehäuse des elektromechanischen Bremssystems drehbeweglich lagerbar ist, wobei die Kugelmutter (3) einstückig mit einem Innenring (151, 171) des Axiallagers (15, 17) ausgebildet ist.

7. Kugelgewindetrieb (1) nach Anspruch 6, **dadurch gekennzeichnet, dass** das Axiallager als Schrägkugellager (15) ausgebildet ist, wobei das Schrägkugellager (15) eine erste Schulter (152) zur Einstellung eines ersten Druckwinkels (α) in der Bremsdrehrichtung und eine zweite Schulter (155) zur Einstellung eines zweiten Druckwinkels (β) in der Entlastungsdrehrichtung aufweist.

8. Kugelgewindetrieb (1) nach Anspruch 6, **dadurch gekennzeichnet, dass** das Axiallager als Vierpunktlager (17) ausgebildet ist, wobei das Vierpunktlager (17) einen ersten Druckwinkel (α) in der Bremsdrehrichtung aufweist und einen zweiten Druckwinkel (β) in der Entlastungsdrehrichtung aufweist.

9. Kugelgewindetrieb (1) nach einem der Ansprüche 7 oder 8, **dadurch gekennzeichnet, dass** der erste Druckwinkel (α) größer ist als der zweite Druckwinkel (β) in der Entlastungsdrehrichtung.

10. Kugelgewindetrieb (1) nach einem der vorhergehenden Ansprüche, **dadurch gekennzeichnet, dass** die Kugeln, die innerhalb des schraubenartig gewundenen Kugelkanals (7) zwischen der Kugelmutter (3) und der Gewindespindel (5) abwälzen einen ersten Kontaktwinkel (γ) in einer Bremsrichtung (B) und einen zweiten Kontaktwinkel (δ) in einer Entlastungsrichtung (E) aufweisen.

11. Kugelgewindetrieb (1) nach Anspruch 10, **dadurch gekennzeichnet, dass** der erste Kontaktwinkel (γ) kleiner ist als der zweite Kontaktwinkel (δ).

12. Verwendung eines Kugelgewindetriebs (1) nach einem der Ansprüche 1 - 11 in einem elektromechanischen Lenksystem, wobei die Gewindespindel (5) zur Übertragung der translatorischen Bewegung mit einer Spurstange eines Lenksystems verbindbar ist und die Entlastungsrichtung (E) einer ersten Einschlagsrichtung des Lenksystems und die Bremsrichtung (B) einer zweiten Einschlagsrichtung des Lenksystems entspricht.

## Claims

1. Ball screw (1) for an electromechanical braking system, wherein a rotational movement of an electrical actuator, which rotates in a braking direction of rotation to actuate a brake of the electromechanical braking system and rotates in a load-relieving direction of rotation to relieve load on the brake, can be transmitted to the ball screw (1) by means of a step-down gear mechanism and can be converted by means of the ball screw (1) into a translational movement, to actuate the brake in a braking direction (B) and to relieve load on the brake in a load-relieving direction (E), which ball screw (1) comprises a ball nut (3) and a threaded spindle (5) which together form a helically wound ball channel (7) with balls rolling therein, and wherein the threaded spindle (5) is formed with a radially outwardly directed counter-stop (111, 114), **characterized in that** the ball nut (3) is designed to receive two or more locating pins (13), wherein the rotational movement can be transmitted by means of the locating pins (13) from the step-down gear mechanism to the wall nut (3) and can be converted by means of the balls into a translational movement of the threaded spindle (5), and **in that** a radial end stop (11) is provided for limiting a translational movement of the threaded spindle (5), wherein the ball nut (3) has a radially inwardly directed stop (113) for mutual, form-fitting engagement with the counter-stop (111, 114).

2. Ball screw (1) according to Claim 1, **characterized in that** the number of locating pins (13) which can be received by the ball nut (3) corresponds to a number of planet gears of a planetary gear mechanism, wherein the step-down gear mechanism is designed as a planetary gear mechanism.

3. Ball screw (1) according to either of the preceding claims, **characterized in that** the threaded spindle (5) is realized with an increased material strength by means of a forming manufacturing method.

4. Ball screw (1) according to one of the preceding claims, **characterized in that** a radial core region of the threaded spindle (5) is formed with a cavity (505).

5. Ball screw (1) according to one of Claims 1 to 4, **characterized in that** the stop (113) is formed in one piece with the ball nut (3) and/or the counter-stop (111) can be placed on one or both axial ends (502) of the threaded spindle (5).

6. Ball screw (1) according to one of the preceding claims, **characterized in that** the ball nut (3) can be mounted so as to be rotatable via an axial bearing (15, 17) in a housing of the electromechanical braking system, wherein the ball nut (3) is formed in one piece with an inner ring (151, 171) of the axial bearing (15, 17).

7. Ball screw (1) according to Claim 6, **characterized in that** the axial bearing is designed as an angular contact ball bearing (15), wherein the angular contact ball bearing (15) has a first shoulder (152) for setting a first pressure angle (α) in the braking direction of rotation and has a second shoulder (155) for setting a second pressure angle (β) in the load-relieving direction of rotation.

8. Ball screw (1) according to Claim 6, **characterized in that** the axial bearing is designed as a four-point bearing (17), wherein the four-point bearing (17) has a first pressure angle (α) in the braking direction of rotation and has a second pressure angle (β) in the load-relieving direction of rotation.

9. Ball screw (1) according to either of Claims 7 and 8, **characterized in that** the first pressure angle (α) is greater than the second pressure angle (β) in the load-relieving direction of rotation.

10. Ball screw (1) according to one of the preceding claims, **characterized in that** the balls, which roll within the helically wound ball channel (7) between the ball nut (3) and the threaded spindle (5), have a first contact angle (γ) in a braking direction (B) and a second contact angle (δ) in a load-relieving direction (E).

11. Ball screw (1) according to Claim 10, **characterized in that** the first contact angle (γ) is less than the second contact angle (δ).

12. Use of a ball screw (1) according to one of Claims 1-11 in an electromechanical steering system, wherein, to transmit the translational movement, the threaded spindle (5) can be connected to a track rod of a steering system, and the load-relieving direction (E) corresponds to a first steering angle direction of the steering system, and the braking direction (B) corresponds to a second steering angle direction of the steering system.

## Revendications

1. Vis d'entraînement à billes (1) pour un système de freinage électromécanique, dans laquelle un mouvement de rotation d'un actionneur électrique, qui tourne dans un sens de rotation de freinage pour l'actionnement d'un frein du système de freinage électromécanique et qui tourne dans un sens de rotation de desserrage pour desserrer le frein, peut être transféré à la vis d'entraînement à billes (1) au moyen d'un réducteur de vitesse, et peut être converti en un mouvement de translation au moyen de la vis d'entraînement à billes (1) pour actionner le frein dans un sens de freinage (B) et pour desserrer le frein dans un sens de desserrage (E), laquelle vis d'entraînement à bille (1) comprend un écrou à billes (3) et une broche filetée (5) qui constituent ensemble un canal de billes (7) enroulé sous forme hélicoïdale avec des billes roulant dans celui-ci, et la broche filetée (5) étant réalisée avec une contre-butée (111, 114) orientée radialement vers l'extérieur, **caractérisée en ce que** l'écrou à billes (3) est réalisé de manière à recevoir deux ou plus de deux goupilles d'ajustement (13), le mouvement de rotation pouvant être transmis au moyen des goupilles d'ajustement (13) du réducteur de vitesse à l'écrou à billes (3) et pouvant être converti au moyen des billes en un mouvement de translation de la broche filetée (5) et **en ce qu'**une butée de fin de course radiale (11) est prévue pour limiter un mouvement de translation de la broche filetée (5), l'écrou à billes (3) présentant une butée (113) orientée radialement vers l'intérieur pour l'engagement mutuel par correspondance de formes avec la contre-butée (111, 114).

2. Vis d'entraînement à billes (1) selon la revendication 1, **caractérisée en ce que** le nombre des goupilles d'ajustement (13) qui peuvent être reçues par l'écrou à billes (3) correspond à un nombre de pignons planétaires d'un engrenage planétaire, le réducteur de vitesse étant réalisé sous forme d'engrenage planétaire.

3. Vis d'entraînement à billes (1) selon l'une quelconque des revendications précédentes, **caractérisée en ce que** la broche filetée (5) est réalisée au moyen d'un procédé de fabrication par déformation avec une résistance de matériau accrue.

4. Vis d'entraînement à billes (1) selon l'une quelconque des revendications précédentes, **caractérisée en ce qu'**une région de noyau radiale de la broche filetée (5) est réalisée avec une cavité (505).

5. Vis d'entraînement à billes (1) selon l'une quelconque des revendications 1 à 4, **caractérisée en ce que** la butée (113) est réalisée d'une seule pièce avec l'écrou à billes (3) et/ou la contre-butée (111) peut être placée sur une ou les deux extrémités axiales (502) de la broche filetée (5).

6. Vis d'entraînement à billes (1) selon l'une quelconque des revendications précédentes, **caractérisée en ce que** l'écrou à billes (3) peut être supporté de manière déplaçable en rotation par le biais d'un palier axial (15, 17) dans un boîtier du système de freinage électromécanique, l'écrou à billes (3) étant réalisé d'une seule pièce avec une bague intérieure (151, 171) du palier axial (15, 17).

7. Vis d'entraînement à billes (1) selon la revendication 6, **caractérisée en ce que** le palier axial est réalisé sous forme de roulement à billes à contact oblique (15), le roulement à billes à contact oblique (15) présentant un premier épaulement (152) pour l'ajustement d'un premier angle de pression (α) dans le sens de rotation de freinage et un deuxième épaulement (155) pour l'ajustement d'un deuxième angle de pression (β) dans le sens de rotation de desserrage.

8. Vis d'entraînement à billes (1) selon la revendication 6, **caractérisée en ce que** le palier axial est réalisé sous forme de palier à quatre points (17), le palier à quatre points (17) présentant un premier angle de pression (α) dans le sens de rotation de freinage et un deuxième angle de pression (β) dans le sens de rotation de desserrage.

9. Vis d'entraînement à billes (1) selon l'une quelconque des revendications 7 et 8, **caractérisée en ce que** le premier angle de pression (α) est supérieur au deuxième angle de pression (β) dans le sens de rotation de desserrage.

10. Vis d'entraînement à billes (1) selon l'une quelconque des revendications précédentes, **caractérisée en ce que** les billes qui roulent à l'intérieur du canal de billes (7) enroulé sous forme hélicoïdale entre l'écrou à billes (3) et la broche filetée (5) présentent un premier angle de contact (γ) dans un sens de freinage (B) et un deuxième angle de contact (δ) dans un sens de desserrage (E).

11. Vis d'entraînement à billes (1) selon la revendication 10, **caractérisée en ce que** le premier angle de contact (γ) est inférieur au deuxième angle de contact (δ).

12. Utilisation d'une vis d'entraînement à billes (1) selon l'une quelconque des revendications 1 à 11 dans un système de direction électromécanique, la broche filetée (5) pour le transfert du mouvement de translation pouvant être connectée à une barre de liaison d'un système de direction et le sens de desserrage (E) correspondant à un premier sens de braquage du système de direction et le sens de freinage (B) correspondant à un deuxième sens de braquage du système de direction.
